# EUROPÄISCHE PATENTSCHRIFT

(11) **EP 1 141 531 B1**
(45) Veröffentlichungstag und Bekanntmachung des Hinweises auf die Patenterteilung: **02.10.2002**
(21) Anmeldenummer: 00904826.5
(22) Anmeldetag: 04.01.2000
(51) Int. Cl.: F02D 13/06, F02D 17/02, F02D 41/36, F01L 9/04

(54) **VERFAHREN ZUR WIEDERINBETRIEBNAHME EINES ZYLINDERS EINER MEHRZYLINDRIGEN BRENNKRAFTMASCHINE**
METHOD FOR PLACING A CYLINDER OF A MULTI-CYLINDER INTERNAL COMBUSTION ENGINE BACK INTO OPERATION
PROCEDE POUR REMETTRE EN MARCHE UN CYLINDRE D'UN MOTEUR A COMBUSTION INTERNE A PLUSIEURS CYLINDRES

(30) Priorität: 08.01.1999 DE 19900509
(43) Veröffentlichungstag der Anmeldung: 10.10.2001
(73) Patentinhaber: SIEMENS AKTIENGESELLSCHAFT, 80333 München (DE)
(72) Erfinder: KOCH, Achim, D-93105 Tegernheim (DE)
(86) Internationale Anmeldenummer: DE0000029
(87) Internationale Veröffentlichungsnummer: WO00040847

(56) Entgegenhaltungen:
- EP-A- 0 367 448
- DE-A- 19 606 585
- US-A- 5 743 221

## Beschreibung

Die Erfindung betrifft ein Verfahren zur Wiederinbetriebnahme eines Zylinders einer mehrzylindrigen Brennkraftmaschine nach Unterbrechung der elektromechanischen Betätigung mindestens eines Gaswechselventils oder der Verbrennung in mindestens einem Zylinder für mehrere Arbeitszyklen gemäß dem Oberbegriff des Anspruches 1 oder 2.

Brennkraftmaschinen, deren Gaswechselventile elektromechanisch betätigt werden, sind bekannt. Im Gegensatz zu nockenwellenbetätigten Ventilen werden diese Ventile zum Öffnen und Schließen von einem Steuergerät in Abhängigkeit von der Drehlage der Kurbelwelle angesteuert; eine feste mechanische Koppelung mit der Kurbelwelle liegt dabei nicht vor.

Solche Gaswechselventile sind beispielsweise aus der Offenlegungsschrift EP 0 724 067 A1 bekannt, von der im Oberbegriff der Ansprüche 1 und 2 ausgegangen wurde. Sie weisen jeweils eine zwischen einer geschlossenen und einer offenen Stellung liegende Ruhestellung auf, aus der sie elektromagnetisch ausgelenkt werden können. In der Ruhestellung befindet sich das Gaswechselventil in einer halb geöffneten Position. Beim Betrieb des elektromechanisch betätigten Ventils in der Brennkraftmaschine kann es zum vorübergehenden Ausfall eines oder mehrerer elektromechanisch betätigter Ventile kommen. Bei einem solchen Ausfall bewegt sich das Ventil automatisch in die halb geöffnete Position der Ruhelage. Um zu verhindern, daß dann eingespritzter und nicht im Zylinder verbrannter Kraftstoff in den Abgastrakt entweicht und es zu erhöhten Emissionen oder zur Beschädigung der Abgasnachbehandlungsanlage kommt, wird bei Erkennen des Ventilausfalles sofort die Kraftstoffzufuhr zu diesem Zylinder unterbrochen. Gemäß der EP 0 724 067 A1 ist in einem solchen Fall bekannt, das elektromechanisch betätigte Gaswechselventil sofort zu schließen und dann wieder in Betrieb zu nehmen.

Aus der DE 196 06 585 A1 ist es bekannt, abgeschaltete Gaswechselventile wieder zuzuschalten und die betreffenden Zylinder während einer Übergangsphase mit entsprechend korrigierten Betriebsparametern zu betreiben.Dabei werden die Gaswechselventile von Nockenwellen betrieben und hydraulisch ab- bzw. zugeschaltet. In der Übergangsphase wird die Brennkraftmaschine mit leicht angefettetem Gemisch betrieben und die wieder in Betrieb genommenen Zylinder werden vorübergehend mit einer größeren Kraftstoffmenge versorgt.

Es hat sich gezeigt, daß auch bei voll funktionsfähigem elektromechanischem Antrieb nach Wiederaufnahme der Betätigung des Gaswechselventils oft kurz danach ein erneuter Ausfall auftritt.

Dies kann auch nach einer planmäßigen Unterbrechung der Verbrennung in mindestens einem Zylinder festgestellt werden, wie sie bei einer Schubabschaltung vorgenommen wird, insbesondere, wenn nach einer Schubabschaltung eine hohe Last der Brennkraftmaschine gefordert wird.

Es ist somit Aufgabe der vorliegenden Erfindung, ein Verfahren zur Wiederinbetriebnahme eines Zylinders einer mehrzylindrigen Brennkraftmaschine mit elektromechanisch betätigten Gaswechselventilen nach einer Unterbrechung der Betätigung mindestens eines Gaswechselventiles oder der Verbrennung in mindestens einem Zylinder anzugeben, mit dem der erneute Betrieb des Zylinders ausfallsicher eingeleitet werden kann.

Diese Aufgabe wird durch die in den Ansprüchen 1 und 2 gekennzeichnete Erfindung gelöst.

Die Erfindung geht von der Erkenntnis aus, daß, weil ein Gaswechselventil nicht betätigt wurde und z.B. in der Ruhelage stand, und/oder keine Verbrennung stattgefunden hat, der Brennraum abhängig von der Zeitdauer, die der Zylinder nicht in Betrieb war, mehr oder weniger stark ausgekühlt ist. Diese Auskühlung kommt vor allem dadurch zustande, daß relativ kalte Luft oder Abgas von der Hubbewegung des Kolbens "gepumpt" wird. Wählt man nun zur Wiederinbetriebnahme des Zylinders dieser Otto- oder Dieselbrennkraftmaschine die gleichen Steuerparameter (z. B. Kraftstoffmenge, Ventilsteuerzeiten, Zünd-bzw. Einspritzzeitpunkt, usw.) wie bei den anderen Zylindern, die weiterbetrieben wurden, dann kommt es bei der Wiederinbetriebnahme des nicht betriebenen Zylinders zu starken zyklischen Schwankungen der Verbrennungen oder sogar zu Verbrennungsaussetzern in diesem Zylinder. Dabei wirkt sich vor allem die verminderte Brennraumtemperatur negativ auf die Brenngeschwindigkeit aus, und es kommt zu einer deutlich verschleppten Verbrennung, bei der die Schwerpunktlage der Verbrennung nicht wie gewohnt 8 bis 12° KW nach dem oberen Totpunkt liegt, sondern um ca. 30 bis 50°. Zusätzlich zu dieser Verschleppung befindet sich oft auch ein erhöhter Frischgemischanteil im Zylinder, der eigentlich eine größere Kraftstoffmasse zur Wiederinbetriebnahme erforderte.

Dies hat nun zur Folge, daß zu dem Zeitpunkt, zu dem das Auslaßventil öffnen soll, der Druck im Brennraum im Vergleich zu den anderen Zylindern wesentlich höher ist. Die Folge ist, daß die elektromechanische Betätigung des Auslaßventils gegen eine sehr große Kraft erfolgen muß. Ist diese Kraft so groß, daß die elektromechanische Betätigung das Gaswechselventil nicht in die Offenstellung bringen kann, kommt es zu einem Ausfall der elektromechanischen Betätigung.

Deshalb sieht die Erfindung vor, bei der Wiederinbetriebnahme des Zylinders nach Unterbrechung der Betätigung eines Gaswechselventils oder der Verbrennung den Zylinder mit anderen Steuerparametern zu betreiben, als die anderen Zylinder. Dabei darf die Last, unter der dieser Zylinder betrieben wird, eine gewisse Lastschwelle nicht überschreiten. Dadurch ist der Druck im Brennraum zum Zeitpunkt, zu dem das Auslaßventil öffnen soll, trotz verschleppter Verbrennung nicht mehr so stark erhöht. Ein Ausfall der elektromechanischen Betätigung des Gaswechselventils ist vermieden.

Dabei wird vor der Wiederinbetriebnahme des Zylinders der Zylinder zuerst mindestens einen Zyklus mit Volllaststeuerzeiten betrieben, allerdings dabei kein Kraftstoff eingespritzt und keine Zündung vorgenommen. Dies stellt sicher, daß überwiegend Luft im Zylinder ist. Davon kann ansonsten in der Regel nicht ausgegangen werden, da, wenn beispielsweise der Betrieb des Auslaßventils unterbrochen wurde, nicht nur Frischgemisch bzw. Frischluft bei einer Expansion angesaugt wird, sondern auch Abgas durch das halb geöffnete Auslaßventil.

Vorteilhafte Ausgestaltungen der Erfindung sind in den Unteransprüchen gekennzeichnet.

Die Erfindung wird nachfolgend in einem Ausführungsbeispiel unter Bezugnahme auf die Zeichnung näher erläutert. Die Zeichnung zeigt:
Fig. 1 eine schematische Darstellung eines elektromechanisch betätigten Gaswechselventils,
Fig. 2 eine schematische Darstellung eines Zylinders einer Brennkraftmaschine mit elektromechanisch betätigten Gaswechselventilen und
Fig. 3 ein Diagramm mit Druckverläufen während einer Verbrennung.

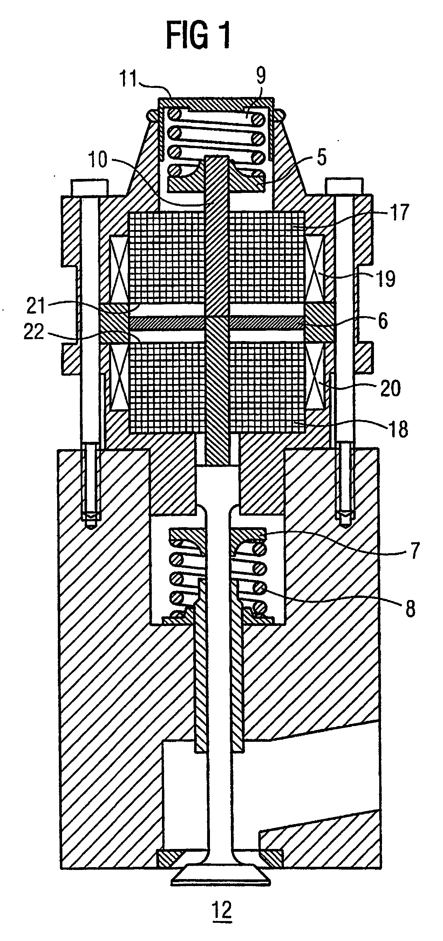

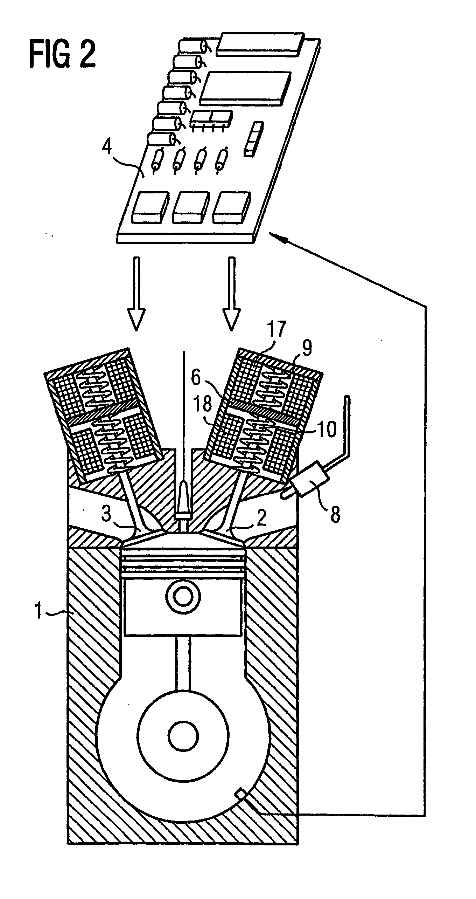

Das Verfahren zur Wiederinbetriebnahme eines Zylinders ist für eine mehrzylindrige Brennkraftmaschine mit elektromechanisch betätigten Gaswechselventilen gedacht. Ein solcher Zylinder ist in Fig. 2 schematisch dargestellt. Der Zylinder 1 weist mindestens ein Einlaßventil 2 und mindestens ein Auslaßventil 3 auf, die elektromechanisch betätigt sind. In den Ansaugtrakt des Zylinders 1 wird durch ein Einspritzventil 8 Kraftstoff eingespritzt. Im Ausführungsbeispiel sind elektromechanisch betätigte Einlaß- und Auslaßventile 2, 3 verwendet, deren Ruheposition in einer neutralen Mittellage ist. Ein solches elektromechanisch betätigtes Ventil ist in Fig. 1 genauer dargestellt.

Das elektromechanisch angetriebene Ein-/Auslaßventil 2, 3 besteht aus einem Ankerschaft 10, der einen Ventilschaft mit Ventilteller und Ventilsitz antreibt. Der Ventilteller ist zwischen zwei Endstellungen bewegbar. In einer oberen Endstellung ist das Ventil 2, 3 geschlossen und in einer unteren geöffnet. Eine Aktuatorfeder 9 ist zwischen einem oberen Federteller 5 und einem Deckel 11 eingespannt und beaufschlagt den Ankerschaft 10 in Richtung der Offenstellung des Ventiltellers. Eine zwischen dem Gehäuse und einem auf dem Ankerschaft 10 angebrachten unteren Federteller 7 angeordnete Ventilfeder 8 beaufschlagt den Ventilteller in die Geschlossenstellung. Der elektromechanische Antrieb besteht aus einem oberen Spulenkern 17 und einem unteren Spulenkern 18, an dem jeweils eine Wicklung 19 und 20 angeordnet ist. In den Spulenkernen 17, 18 ist der Ankerschaft 10 verschiebbar. Auf ihm ist zwischen dem oberen Spulenkern 17 und dem unteren Spulenkern 18 ein Anker 6 angeordnet. Die dem Anker 6 zugekehrten Stirnseiten 21 und 22 der beiden Spulenkerne 17 und 18 bilden Anschläge für den Anker 6 und definieren damit die obere und untere Endstellung des Ventils 2, 3, in der es geöffnet bzw. geschlossen ist. Solange die Wicklungen 19 und 20 stromlos sind, wird der Anker 6 von der Ventilfeder 8 und der Aktuatorfeder 9 in der Ruhelage zwischen den beiden Stirnseiten 21 und 22 gehalten, wie es in der Zeichnung dargestellt ist. Die beiden Wicklungen 19 und 20 werden von einer Treiberschaltung bestromt, die vom Steuergerät 4 angesteuert wird. Wird eine der Wicklungen 19 bzw. 20 stromdurchflossen, entsteht am von Wicklung 19 bzw. 20 und Spulenkern 17 bzw. 18 gebildeten Elektromagneten ein Magnetfeld, das den Anker 6 zum Spulenkern 17 bzw. 18 hinzieht, wodurch der Ankerschaft 10 und damit das Ventil angetrieben wird.

Um ein solches elektromechanisch betätigtes Ventil 2, 3 aus der Ruhelage in eine Endstellung zu bewegen sind zwei Vorgehensweisen möglich: Beim leistungsminimalen Anschwingen in Resonanzfrequenz werden die Wicklungen 19 und 20 abwechselnd in der Eigenfrequenz des mechanischen Feder-Masse-Schwingers erregt. Dadurch ist es möglich, die Schwingungsamplitude des Ankers 6 und damit des mit ihm verbundenen Ankerschaftes 10 zu erhöhen, bis der Anker 6 an einer der Stirnseiten 21 bzw. 22 gefangen werden kann. In dieser Stellung kann er durch geeignete Bestromung der entsprechenden Wicklung 19 bzw. 20 mit geringem Energieaufwand gehalten werden. Ein solcher Anschwingvorgang dauert typischerweise unter 100 ms und erfordert nur einen relativ geringen Strom durch die Wicklung 19, 20. Die zweite Vorgehensweise besteht in einem einmaligen Anziehen des Ankers 6 durch einen der von Wicklung 19 bzw. 20 und Spulenkern 17 bzw. 18 gebildeten Elektromagneten, wobei die Wicklung 19 bzw. 20 kurzzeitig mit einem sehr hohen Strom beaufschlagt wird, bis der Anker 6 am Ankerschaft 10 an die Stirnseite 21 bzw. 22 gezogen ist. Dieser Vorgang ist sehr viel schneller durchzuführen, typischerweise unter 10 ms, erfordert jedoch relativ hohe elektrische Leistung.

Kommt es aufgrund nicht vorhersehbarer Ereignisse, z.B. starker zyklischer Schwankungen des Verbrennungsverlaufes oder durch stochastisch auftretende, ungewöhnlich hohe Reibungskräfte in den Führungen eines Ankerschaftes 10, zu einem Ausfall eines oder mehrerer Gaswechselventile 2, 3 eines Zylinders 1, so muß der Ausfall durch einen geeigneten Sensor, z.B. einen Hubsensor, der die Hubstellung des Ventils 2, 3 erfaßt, erkannt werden und anschließend die Kraftstoffzufuhr in diesen Zylinder 1 unterbrochen werden, um zu verhindern, daß es aufgrund eingespritzten und nicht im Zylinder verbrannten Kraftstoffes zu erhöhten Abgasemissionen oder Beschädigungen der Abgasnachbehandlungsanlage kommt.

Anschließend wird vom Steuergerät 4 eine elektrische Überprüfung durchgeführt, um sicherzustellen, daß kein elektrischer Defekt in einer der Wicklungen 19, 20 oder der Treiberschaltungen vorliegt. Ist dies der Fall, wird die elektromechanische Betätigung des Gaswechselventils wiederaufgenommen. Dies kann durch eine der oben beschriebenen Vorgehensweisen bewirkt werden.

Wird dabei das Anziehen in eine Endstellung gewählt, ist es zweckmäßig, die Zeitsteuerung der Bestromung der entsprechenden Wicklung 19, 20 so zu wählen, daß die Bewegung des Ventils 2, 3 in die Endstellung von der Kolbenbewegung unterstützt wird. Soll das Ventil 2, 3 z.B. in die geschlossene Position gebracht werden, dann müßte die Bestromung der Wicklung 19 so erfolgen, daß sie im Bereich des unteren Totpunktes des Kolbens des Zylinders 1 bei dessen Aufwärtsbewegung einsetzt. Dann unterstützen die Gasströmung am Ventil vorbei und der sich im Zylinder aufbauende Druck die Bewegung des Ventils 2, 3. Da die Zeit zum Anziehen des Ankers 6 in die Endstellung in erster Näherung konstant ist, sollte der Zeitpunkt zum Beginn der Bestromung der Spule 19 bzw. 20 abhängig von der Drehzahl variabel gewählt werden. Auf jeden Fall muß sichergestellt sein, daß das Ventil 2, 3 die Endstellung erreicht hat, bevor der Kolben nach dem oberen Totpunkt beginnt sich nach unten zu bewegen.

Da während der Zeit, in der das Ventil 2, 3 in der Ruhelage stand, keine Verbrennung im Zylinder 1 stattgefunden hat, ist der Brennraum abhängig von der Ausfallzeit des Zylinders 1 mehr oder weniger ausgekühlt. Dies ist auch der Fall, wenn beispielsweise bei Schubabschaltung die Verbrennung planmäßig unterbrochen wurde. Diese Auskühlung kommt vor allem dadurch zustande, daß relativ kalte Luft oder Abgas durch diesen Zylinder 1 "gepumpt" wurde. Das mit der Hubbewegung des Kolbens ein- und ausströmende Gas verringerte die Temperatur des Kolbenbodens, des Brennraumdachs, der Zylinderwandungen und der Ventile 2, 3. Um diese Auskühlung zu minimieren, sollte dafür gesorgt werden, daß eine Strömung von Abgas durch den Zylinder 1 in den Ansaugtrakt nicht möglich ist, wenn erkannt wurde, daß ein Gaswechselventil 2, 3 in Ruhelage stehengeblieben ist.

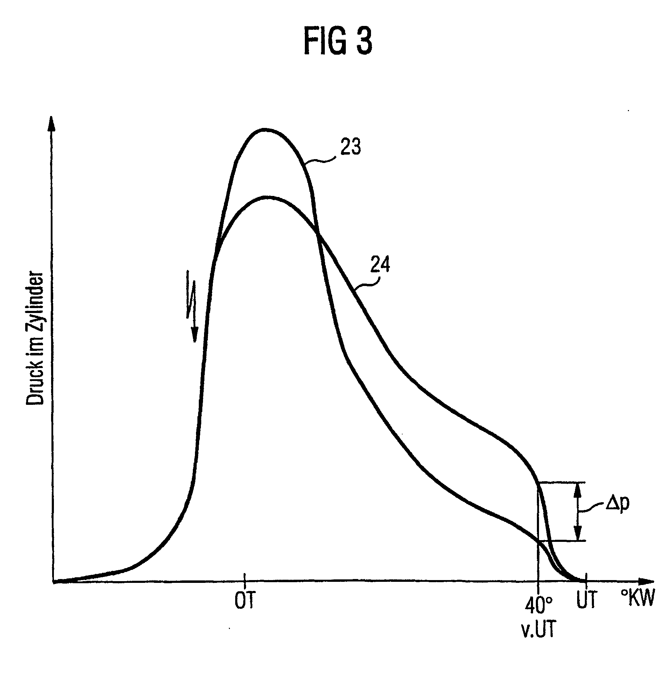

Diese verminderte Brennraumtemperatur verursacht eine stark verschleppte Verbrennung, wie sie in Figur 3 in der Druckkurve 24 dargestellt ist. Wie dort zu sehen ist, ist die Verbrennung nach der Zündung, die vor dem oberen Totpunkt stattfindet, bei Betrieb unter normaler Last stark verschleppt, weshalb beim Öffnen des Auslaßventils 3 vor dem unteren Totpunkt ein erhöhter Druck im Zylinder 1 herrscht. Der Druckverlauf bei normaler Verbrennung ist in Druckkurve 23 beispielhaft dargestellt. Wie zu sehen ist, ist durch die verschleppte Verbrennung der Druck im Brennraum zum Zeitpunkt der Öffnung des Auslaßventils 3 um Δp erhöht.

Da neben der Brennraumtemperaturverminderung die im Zylinder 1 vor Wiederinbetriebnahme vorliegende Gaszusammensetzung nicht bekannt ist, wird der Zylinder 1 zunächst einen Zyklus mit Volllaststeuerzeiten betrieben, um sicherzustellen, daß überwiegend Frischluft im Zylinder 1 ist. Ein solcher Zyklus beginnt in der Regel mit dem Öffnen des Einlaßventils 2, kann aber auch bei negativer Ventilüberschneidung mit dem Schließen des Auslaßventils 3 beginnen. Er endet mit dem Öffnen des Auslaßventils 3. Alternativ kann der Zylinder 1 zunächst auch mehrere Zyklen mit Vollaststeuerzeiten betrieben werden.

Zur Verbesserung der Gemischaufbereitung für den dann folgenden ersten Zyklus der Wiederinbetriebnahme kann es bei einer Ottobrennkraftmaschine zweckmäßig sein, die Ventilsteuerzeiten so zu wählen, daß die Einströmbedingungen des Kraftstoff-Luftgemischs in dem Brennraum verbessert werden. Dazu wird zuerst im Bereich des oberen Totpunkts das Auslaßventil geschlössen. Bewegt sich der Kolben nun wieder nach unten, baut sich im Zylinder 1 ein Unterdruck auf. Öffnet man nun das Einlaßventil 2, ist die Einströmgeschwindigkeit in den Brennraum aufgrund des Druckgefälles sehr groß und dadurch die Gemischaufbereitung sehr gut.

Nun wird in den Zylinder 1 Kraftstoff über das Ventil 8 eingespritzt und dieser zur Zündung gebracht. Um ein erneutes Hängenbleiben des Ventils 2, 3 in der Ruhelage zu verhindern, werden die Steuerparameter so gewählt, daß der Zylinder 1 mit anderen Steuerparametern als die anderen Zylinder betrieben wird. Dabei ist eine Lastschwelle gegeben, die nicht überschritten werden darf, um den Zylinder 1 sicher wieder in Betrieb zu setzen. Durch die Befüllung des Zylinders mit Frischluft ohne Einspritzung, die Verringerung der angesaugten Frischgasmasse für den ersten Zyklus nach Wiederinbetriebnahme und die Anpassung der Steuerparameter für die Wiederinbetriebnahme kann das Druckniveau bei dieser verschleppten Verbrennung abgesenkt werden, und es ergibt sich zum Zeitpunkt der Öffnung des Auslaßventils der Druck einer normalen Verbrennung. Der erhöhte Druck im Zylinder beim Öffnungszeitpunkt des Auslaßventiles 3 ist dadurch vermieden, wodurch die Gaswechselventile 2, 3 ausfallsicher betätigt werden können.

Die anderen Zylinder können vorübergehend unter erhöhter Last betrieben werden, um eine eventuell verringerte Last des wieder in Betrieb genommenen Zylinders 1 auszugleichen.

Obige Merkmale sind auch beim Wiederstart eines oder mehrerer Zylinder 1 nach einer Unterbrechung der Betätigung eines oder mehrerer Gaswechselventile und auch nach Unterbrechung der Verbrennung in mindestens einem Zylinder bei Schubabschaltung verwendbar, da hier gleiche Phänomene auftreten. Insbesondere beim Übergang von Schubabschaltung zu hoher Last kann sich nämlich ein erhöhter Druck im Zylinder beim Öffnen des Auslaßventiles einstellen, so daß die Gefahr eines Ventilausfalls gegeben ist. Hier schafft die Erfindung Abhilfe.

## Patentansprüche

1. Verfahren zur Wiederinbetriebnahme eines oder mehrerer Zylinder einer mehrzylindrigen Brennkraftmaschine mit elektromechanisch betätigten Gaswechselventilen (2, 3) nach Unterbrechung der Betätigung mindestens eines Gaswechselventiles (2, 3), bei dem zuerst die Betätigung des Gaswechselventils (2, 3) wiederaufgenommen wird, **dadurch gekennzeichnet, daß** der Zylinder (1) zuerst mindestens einen Zyklus lang ohne Kraftstoffzuführung und ohne Zündung mit Vollaststeuerzeiten betrieben wird und daß dann der Zylinder (1) zum Aufheizen vorübergehend mit anderen Steuerparametern als die anderen Zylinder (1) betrieben wird, wobei die Last des Zylinders (1) unterhalb einer vorgegebenen Lastschwelle gehalten wird und die anderen Zylinder (1) mit einer höheren Last betrieben werden.

2. Verfahren zur Wiederinbetriebnahme eines oder mehrerer Zylinder (1) einer mehrzylindrigen Brennkraftmaschine mit elektromechanisch betätigten Gaswechselventilen (2, 3) nach Unterbrechung der Verbrennung in mindestens einem Zylinder (1) für mehrere Arbeitszyklen, bei dem die Verbrennung im Zylinder (1) wiederaufgenommen wird, **dadurch gekennzeichnet, daß** der Zylinder (1) zuerst mindestens einen Zyklus lang ohne Kraftstoffzuführung und ohne Zündung mit Vollaststeuerzeiten betrieben wird und daß dann der Zylinder (1) zum Aufheizen vorübergehend mit anderen Steuerparametern als die anderen Zylinder (1) betrieben wird, wobei die Last des Zylinders (1) unterhalb einer vorgegebenen Lastschwelle gehalten wirdn und die anderen Zylinder (1) mit einer höheren Last betrieben werden.

3. Verfahren nach Anspruch 1 oder 2, **dadurch gekennzeichnet, daß** zum Betrieb mit anderen Steuerparametern eine oder mehrere der folgenden Maßnahmen ergriffen werden:
Verminderung der dem Zylinder (1) zugeführten Kraftstoffmenge, Verstellen des Zünd-/ Einspritzzeitpunktes in Richtung früh, Steigerung der Ladungshomogenisierung durch Öffnen des Einlaßventils (2) nach dem Schließen des Auslaßventils (3) bei bereits erfolgender Ansaugbewegung des Kolbens des Zylinders (1).

4. Verfahren nach einem der vorherigen Ansprüche, **dadurch gekennzeichnet, daß** zum Betrieb des Zylinders (1) unter geringerer Last die Betriebsparameter dieses Zylinders (1) so gewählt werden, daß von einem vorgegebenen Lambdawert abgewichen wird, und die Betriebsparameter der anderen Zylinder so gewählt werden, daß dies eine gegenläufige Abweichung des Lambdawertes der anderen Zylinder bewirkt, wobei die Abweichungen so sind, daß das vereinigte Abgas aller Zylinder wieder dem vorgegebenen Lambdawert entspricht.

5. Verfahren nach einem der vorherigen Ansprüche, **dadurch gekennzeichnet, daß** bei der Wahl der Betriebsparameter des Zylinders (1) vor Wiederinbetriebnahme berücksichtigt wird, ob die Betätigung des Einlaß- (2) oder des Auslaßventils (3) unterbrochen war.

6. Verfahren nach einem der vorherigen Ansprüche, **dadurch gekennzeichnet, daß** bei Unterbrechung der Betätigung des Gaswechselventils (2, 3) durch geeignete Stellung der anderen Gaswechselventile (2, 3) des Zylinders(1) dafür gesorgt wird, daß eine Strömung von Abgas durch den Zylinder (1) und in den Ansaugtrakt verhindert ist.

7. Verfahren nach einem der vorherigen Ansprüche für ein elektromechanisch betätigtes Gaswechselventil (2, 3), das zwischen zwei Endstellungen - einer Geschlossenstellung und einer Offenstellung - beweglich ist und dessen Ruhelage ohne elektromechanische Betätigung in einer Mittellage zwischen den Endstellungen ist, **dadurch gekennzeichnet, daß** das Unterbrechen der Betätigung des mindestens einen Gaswechselventils (2, 3) durch einen unerwünschten Ausfall der Betätigung erfolgt ist, bei der das Gaswechselventil (2, 3) in der Ruhelage stehen bleibt.

8. Verfahren nach Anspruch 7, **dadurch gekennzeichnet, daß** die Wiederaufnahme der Betätigung so erfolgt, daß die Kolbenbewegung die Bewegung des Gaswechselventils (2, 3) in eine Endstellung unterstützt.

9. Verfahren nach einem der Ansprüche 1 mit 7, **dadurch gekennzeichnet, daß** das Unterbrechen der Betätigung des mindestens einen Gaswechselventils (2, 3) oder das Unterbrechen der Verbrennung bei Schubabschaltung erfolgt.

10. Verfahren nach einem der vorherigen Ansprüche, **dadurch gekennzeichnet, daß** die anderen Zylinder unter erhöhter Last betrieben werden, solange der Zylinder (1) unter einer geringeren Last betrieben wird.

## Claims

1. Method for the reactivation of one or more cylinders of a multicylinder internal combustion engine with electromechanically actuated gas flow valves (2, 3) after interruption of the actuation of at least one gas flow valve (2, 3), with the actuation of the gas flow valve (2, 3) being first restored, **characterised in that** the cylinder (1) is first operated for at least one cycle without fuel supply and without ignition, under full load timing, and that then the cylinder (1) is operated under control parameters different from those of the other cylinders (1) for heating purposes, with the load of the cylinder (1) being held below a specified load threshold and the other cylinders (1) being operated at a higher load.

2. Method for the reactivation of one or more cylinders (1) of a multicylinder internal combustion engine with electromechanically actuated gas flow valves (2, 3) after interruption of the combustion in at least one cylinder (1) for several combustion cycles, with the combustion in cylinder (1) being restored, **characterised in that** cylinder (1) is first operated for at least one cycle without fuel supply and without ignition under full load timing and that cylinder (1) is then temporarily operated under control parameters different from those of the other cylinders (1) for heating purposes, with the load of cylinder (1) being held below a specified load threshold and the other cylinders (1) being operated at a higher load.

3. Method according to Claims 1 or 2, **characterised in that** one or more of the following measures are taken for operation with different control parameters:
Reduction of the amount of fuel supplied to cylinder (1), advancing the ignition/injection time point, increasing the load homogenisation by opening the inlet valve (2) after closing the outlet valve (3) with the induction stroke of the piston of cylinder (1) already performed.

4. Method according to one of the preceding claims, **characterised in that** to operate the cylinder (1) under reduced load the operating parameters of this cylinder (1) are selected so that there is a deviation from a specified lambda value and the operating parameters of the other cylinders are selected so that this has the effect of an opposite deviation of the lambda value of the other cylinders, whereby the deviations are such that the combined exhaust gas of all cylinders again correspond to the specified lambda value.

5. Method according to one of the preceding claims, **characterised in that** whether the actuation of the inlet valve (2) or of the outlet valve (3) was interrupted is taken into account before choosing the operating parameters of cylinder (1) before reactivation.

6. Method according to one of the preceding claims, **characterised in that** when interrupting the actuation of the gas flow valve (2, 3), it is ensured by a suitable setting of the other gas flow valves (2, 3) of the cylinder (1) that a flow of exhaust gas through the cylinder (1) and into the induction tract is prevented.

7. Method according to one of the preceding claims for an electromechanically actuated gas flow valve (2, 3) that it can be moved between two end positions - a closed position and an open position - and its at-rest position without electromechanical actuation is a mid position between the end positions, **characterised in that** the interruption of the actuation of at least one gas flow valve (2, 3) by an unwanted failure of the actuation is achieved, whereby the gas flow valve (2, 3) remains stationary in the at-rest position.

8. Method according to Claim 7, **characterised in that** the restoration of actuation takes place such that the piston movement supports the movement of the gas flow valve (2, 3) to an end position.

9. Method according to one of Claims 1 to 7, **characterised in that** the interruption of the actuation of at least one gas flow valve (2, 3) or the interruption of the combustion takes place during overrun fuel cut-off.

10. Method according to one of the preceding claims, **characterised in that** the other cylinders are operated under increased load, as long as the cylinder (1) is operated under reduced load.

## Revendications

1. Procédé pour la remise en marche d'un ou plusieurs cylindres d'un moteur à combustion interne multicylindrique équipé de soupapes de distribution des gaz (2, 3) à actionnement électromécanique après une interruption de l'actionnement d'au moins une soupape de distribution des gaz (2, 3), dans lequel l'actionnement de la soupape de distribution des gaz (2, 3) est repris initialement, **caractérisé en ce qu'**on fait travailler initialement le cylindre (1) pendant au moins un cycle sans alimentation en carburant et sans allumage avec des temps de commande de pleine charge et **en ce qu'**ensuite, afin d'élever la température, on fait travailler temporairement le cylindre (1) avec des paramètres de commande différents de ceux des autres cylindres (1), la charge du cylindre (1) étant maintenue au-dessous d'un seuil de charge prédéterminé, et on fait travailler les autres cylindres (1) sous une charge plus élevée.

2. Procédé pour la remise en marche d'un ou plusieurs cylindres d'un moteur à combustion interne multicylindrique équipé de soupapes de distribution des gaz (2, 3) à actionnement électromécanique après une interruption de la combustion dans au moins un cylindre (1) pendant plusieurs cycles de travail, dans lequel la combustion est reprise dans le cylindre (1), **caractérisé en ce qu'**on fait travailler initialement le cylindre (1) pendant au moins un cycle sans alimentation en carburant et sans allumage avec des temps de commande de pleine charge et **en ce qu'**ensuite, afin d'élever la température, on fait travailler temporairement le cylindre (1) avec des paramètres de commande différents de ceux des autres cylindres (1), la charge du cylindre (1) étant maintenue au-dessous d'un seuil de charge prédéterminé, et on fait travailler les autres cylindres (1) sous une charge plus élevée.

3. Procédé selon la revendication 1 ou 2, **caractérisé en ce que**, pour le travail avec des paramètres de commande différents, on prend une ou plusieurs des dispositions suivantes :
diminution de la quantité de carburant envoyée au cylindre (1), modification du réglage du point d'allumage/injection en direction de l'avance, intensification de l'homogénéisation de la charge obtenue en ouvrant la soupape d'admission (2) après la fermeture de la soupape d'échappement (3) alors que le mouvement d'aspiration du piston du cylindre (1) est déjà en cours.

4. Procédé selon l'une des revendications précédentes, **caractérisé en ce que**, pour faire travailler le cylindre (1) sous une plus faible charge, les paramètres de fonctionnement de ce cylindre (1) sont choisis de manière qu'on s'écarte d'une valeur lambda prédéterminée, et on choisit les paramètres de fonctionnement de manière que ceci détermine un écart inverse par rapport à la valeur lambda dans les autres cylindres, les écarts étant tels que les gaz d'échappement réunis de tous les cylindres correspondent de nouveau à la valeur lambda prédéterminée.

5. Procédé selon l'une des revendications précédentes, **caractérisé en ce que** pour le choix des paramètres de fonctionnement du cylindre (1) avant la remise en marche, on vérifie si c'est l'actionnement de la soupape d'admission (2) ou celui de la soupape d'échappement (3) qui a été interrompu.

6. Procédé selon l'une des revendications précédentes, **caractérisé en ce que**, lors de l'interruption de la soupape de distribution des gaz (2, 3), on fait en sorte, par un positionnement approprié des soupapes de distribution des gaz (2, 3) du cylindre (1), qu'un écoulement des gaz d'échappement à travers le cylindre (1) et aboutissant au circuit d'admission soit empêché.

7. Procédé selon une des revendications précédentes pour une soupape de distribution des gaz (2, 3) à actionnement électromécanique qui peut se déplacer entre deux positions extrêmes - une position fermée et une position ouverte - et dont la position de repos sans actionnement électromécanique est une position moyenne entre les positions extrêmes, **caractérisé en ce que** l'interruption de l'actionnement d'au moins une soupape de distribution des gaz (2, 3) est provoquée par une défaillance intempestive de l'actionnement dans laquelle la soupape de distribution des gaz (2, 3) reste dans la position de repos.

8. Procédé selon la revendication 7, **caractérisé en ce que** la remise en marche de l'actionnement s'effectue de manière que le mouvement du piston assiste le placement de la soupape de distribution des gaz (2, 3) dans une position extrême.

9. Procédé selon la revendication 1 à 7, **caractérisé en ce que** l'interruption de l'actionnement d'au moins une soupape de distribution des gaz (2, 3) ou l'interruption de la combustion se produit lors d'une coupure d'injection.

10. Procédé selon une des revendications précédentes, **caractérisé en ce que** les autres cylindres travaillent sous une charge plus élevée aussi longtemps que le cylindre (1) travaille sous une charge plus faible.
